# EUROPÄISCHE PATENTSCHRIFT

(11) **EP 3 440 480 B1**
(45) Veröffentlichungstag und Bekanntmachung des Hinweises auf die Patenterteilung: **05.01.2022**
(21) Anmeldenummer: 17712778.4
(22) Anmeldetag: 22.03.2017
(51) Int. Cl.: G01S 19/08, G01S 19/28, G01S 19/49, G01S 19/42, G01S 19/03, G01S 5/00

(54) **NAVIGATIONSVERFAHREN, NAVIGATIONSEINRICHTUNG UND NAVIGATIONSSYSTEM**
NAVIGATION METHOD, NAVIGATION DEVICE AND NAVIGATION SYSTEM
PROCÉDÉ DE NAVIGATION, DISPOSITIF DE NAVIGATION ET SYSTÈME DE NAVIGATION

(30) Priorität: 07.04.2016 DE 102016205843
(43) Veröffentlichungstag der Anmeldung: 13.02.2019
(73) Patentinhaber: Volkswagen Aktiengesellschaft, 38440 Wolfsburg (DE)
(72) Erfinder: HERMANN, Frank, 14473 Potsdam (DE); KOCH, Ronald, 10243 Berlin (DE); REMUSS, Volker, 10707 Berlin (DE); WITZEL, Alexander, 38527 Meine (DE)
(86) Internationale Anmeldenummer: PCT/EP2017/056825
(87) Internationale Veröffentlichungsnummer: WO 2017/174360

(56) Entgegenhaltungen:
- EP-A2- 2 620 787
- WO-A1-2013/067526
- WO-A1-2015/118819
- US-A1- 2008 074 317
- US-B1- 6 329 945

## Beschreibung

Die Erfindung betrifft ein Navigationsverfahren und eine Navigationseinrichtung, wie sie insbesondere in Kraftfahrzeugen zum Einsatz kommen.

Im Allgemeinen sind Fahrzeugnavigationssysteme bekannt, die fest in ein Kraftfahrzeug eingebaut sind oder als mobile Einrichtung vorgesehen sind.

In Fahrzeugnavigationssystemen ist typischerweise Kartenmaterial gespeichert und das Navigationssystem ermittelt eine aktuelle Position des Fahrzeugs mit Hilfe eines Satellitennavigationssystems, allgemein als GNSS (Globales Navigationssatellitensystem) bezeichnet, wie zum Beispiel GPS, GLONASS, Galileo usw.

Die von einem GNSS empfangenen Signale können noch mit weiteren Daten kombiniert werden, wie zum Beispiel mit Sensorsignalen des Kraftfahrzeugs, die indikativ für den Fahrzeugzustand sind (Radgeschwindigkeitssensoren und dergleichen).

Es ist außerdem bekannt, die Genauigkeit der vom GNSS empfangenen Signale weiter zu verbessern, wie im Folgenden erläutert wird.

Bei dem sogenannten AGNSS (engl.: Assisted Global Network Satellite System, auf Deutsch: gestütztes globales Satellitennavigationssystem) werden die Positionsdaten des GNSS mit Korrekturdaten korrigiert, die bspw. Abweichungen der Satelliten von ihrer Umlaufbahn und Störungen in der Ionosphäre berücksichtigen. Das DGNSS (Differential GNSS) verwendet Korrekturdaten von Bodenstationen. Zusätzlich zu Daten der Satelliten des GNSS können auch noch Orbitdaten weiterer Satelliten verwendet werden (z.B. SBAS, engl.: Satellite Based Agumentation System), um die Positionsgenauigkeit zu erhöhen. Die AGNSS- oder SBAS-Korrekturdaten können z.B. über eine drahtlose Kommunikationsverbindung abgerufen werden. Weiterhin ist es für GNSS-Chips in Navigationssystemen bekannt, die Signalgüte abzuschätzen. Dazu verwendet der GNSS-Chip sogenannte DOP-Werte (engl.: Dilution Of Precision), die die Anzahl der sichtbaren Satelliten und die Satellitenkonfiguration berücksichtigen und für eine gegebene Satellitenkonstellation an einem bestimmten Ort beschreiben, wie gut diese Konstellation zur Messung geeignet ist. Der GNSS-Chip kann auch das sogenannte Signal-to-Noise-Ratio (SNR) verwenden, das die Qualität des Signals als Quotient zwischen Signal und Rauschen angibt.

Ferner ist es bekannt, dass die Güte der GNSS-Ortung von Hindernissen zwischen den sendenden Satelliten und dem empfangenden Navigationsgerät abhängt. So können bspw. Bauwerke das Signal eines Satelliten abblocken, was auch als "Abschatten" bezeichnet wird. Dies geschieht z. B. in Straßen mit hohen Gebäuden, in Tunneln, in der Tiefgarage, in Straßen, die übereinander angeordnet sind, Unterführungen und dergleichen. Außerdem können Satellitensignale von Bauwerken gespiegelt werden. Auch atmosphärische Störungen bzw. Störquellen, wie Wolken, kurzfristige Szintillationen in der Ionosphäre, Niederschlag oder auch erhöhte Signalreflektion an Objekten (Laub, Gebäude, Gebirge) durch Niederschlag, können die Signalqualität und damit die Güte der GNSS-Ortung negativ beeinflussen.

Die chinesische Offenlegungsschrift CN 102735251 A zeigt ein cloudbasiertes GPS-Navigationsverfahren für ein Navigationsgerät. Um die Rechenlast des Navigationsgeräts zu vermindern, werden Positionsdaten und Zieldaten an einen entfernten Rechner geschickt, der die Route zum Ziel berechnet und die Route wieder zum Navigationsgerät schickt.

Aus der US Patentveröffentlichungsschrift US 2008/0293426 A1 ist es bekannt, verschiedene Modi für eine Positionsbestimmung einer mobilen Einrichtung vorzusehen. Kann mit einem ersten Modus die Position der mobilen Einrichtung nicht ermittelt werden, so wird eine Dienstgüte der Positionsbestimmung verringert und mit einem weiteren Modus mit geringerer Dienstgüte die Positionsbestimmung ausgeführt. Außerdem kann die Dienstgüte in Abhängigkeit weiterer Parameter bestimmt werden, wie bspw. auch Umgebungsbedingungen.

Die internationale Veröffentlichungsschrift WO 2015/126499 betrifft die SLAM (Simultaneous Localization and Mapping) Technologie. Es wird gezeigt, dass SLAM nur unter Verwendung von GNSS-Daten ausgeführt werden kann. GNSS-Signale, die bspw. durch ein Gebäude oder andere Hindernisse abgeschattet oder reflektiert werden, können anhand des SNR erkannt werden. Solche SNR-Daten können von vielen verschiedenen Quellen stammen, z. B. von verschiedenen GNSS-Empfängern. Diese SNR-Daten können zusammengefasst werden und daraus kann der Ort von solchen Hindernissen ermittelt werden.

Des Weiteren ist aus der US Offenlegungsschrift US 2008/0074317 A1 eine Methode und eine Vorrichtung bekannt, welche den Ort eines Gerätes bestimmt anhand von Signalen von einer Mehrzahl von Satelliten und zur Korrektur "Threshold"-Daten verwendet.

Die US Patentschrift US 6,329,945 B1 zeigt ein System, welches Satelliten dazu benutzt eine Himmelskarte zu erstellen, welches Gütedaten verwendet, wobei die Gütedaten sich auf Orte im Himmel beziehen und die Güte eines Signals angeben, welches von diesen Orten kommt.

Auch wenn die beiden diskutierten Veröffentlichungsschriften prinzipiell Wege aufzeigen, Hindernisse zwischen einem Navigationsgerät und einem Satellitensignal zu berücksichtigen, erlauben die dort aufgezeigten Lösungen keine vollständige Berücksichtigung von solchen Hindernissen.

Aufgabe der vorliegenden Erfindung ist es daher, ein Navigationsverfahren und eine Navigationseinrichtung bereitzustellen, welche die oben genannten Nachteile wenigstens teilweise überwinden und eine verbesserte Berücksichtigung von Hindernissen erlauben.

Diese Aufgabe wird durch das erfindungsgemäße Navigationsverfahren nach Anspruch 1 und die Navigationseinrichtung nach Anspruch 8 gelöst.

Weitere vorteilhafte Aspekte der Erfindung ergeben sich aus den Unteransprüchen und der folgenden Beschreibung bevorzugter Ausführungsbeispiele der vorliegenden Erfindung.

Ein erfindungsgemäßes Navigationsverfahren umfasst das Empfangen eines Satellitennavigationssignals von einem Satellitennavigationssystem, das eingangs auch als GNSS bezeichnet wurde und bspw. ein GPS, GLONASS, Galileo oder ein anderes GNSS sein kann. Das Navigationsverfahren dient bspw. der Ortung eines Wasser-, Luft- oder Landfahrzeugs, insbesondere eines Kraftfahrzeugs.

Die Satellitennavigationssignale stammen typischerweise von Satelliten des Satellitennavigationssystems, wie es dem Fachmann allgemein bekannt ist.

Ferner umfasst das Navigationsverfahren das Ermitteln einer Position, basierend auf dem empfangenen Satellitennavigationssignal, wie es dem Fachmann grundsätzlich bekannt ist. Die vorliegende Erfindung ist natürlich nicht auf den Empfang eines einzigen Satellitennavigationssignals eingeschränkt und die Bezugnahme auf ein Satellitennavigationssignal ist rein funktional zu verstehen. Zur Positionsermittlung können folglich, wie es fachüblich ist, auch Satellitennavigationssignale von mehreren (zwei, drei, vier, etc.) Satelliten verwendet werden. Gleichermaßen ist die vorliegende Erfindung nicht auf den Empfang nur eines Satellitennavigationssignals von nur einem Satellitennavigationssystem beschränkt, sondern es können mehrere Satellitennavigationssignale von einem oder auch von mehreren Satellitennavigationssystemen empfangen werden und darauf basierend die Position ermittelt werden.

Außerdem werden Gütedaten erhalten, die eine Satellitennavigationssignalgüte in Abhängigkeit einer Ortsinformation angeben. Die Ortsinformation ist indikativ für den Ort, für den die Satellitennavigationssignalgüte angegeben ist. Die Ortsinformation kann bspw. in Form von Koordinaten oder dergleichen vorhanden sein. Durch Abgleichen der ermittelten Position mit der Ortsinformation wird für die ermittelte Position die zugehörige Satellitennavigationssignalgüte ermittelt.

Diese Gütedaten können lokal vorhanden sein, z. B. in einem Speicher in einer Navigationseinrichtung, die das hierin beschriebene Verfahren ausführt und weiter unten näher erläutert wird, oder sie können auch aus der "Cloud", also z. B. von einem entfernten Computer erhalten werden, indem sie bspw. von dort abgerufen werden. Es versteht sich von selbst, dass der "entfernte Computer" bzw. die "Cloud" hier rein funktional zu verstehen ist und darunter eine beliebige Anzahl von Prozessoren, Servern, Rechnerclustern, Großrechenzentren oder dergleichen verstanden werden kann.

Die Kommunikation zu dem entfernten Computer (zur "Cloud") kann z. B. über eine drahtlose Schnittstelle geschehen, die allgemein Daten über ein drahtloses Netz, wie ein Mobilfunknetz (GSM (engl. "Global System for Mobile Communications")), UMTS (engl. "Universal Mobile Telecommunications System"), etc.) oder WLAN (engl. "Wireless Local Area Network") oder dergleichen übermittelt. Die Daten können dabei über ein Netzwerk oder auch das Internet bezogen werden.

Die ermittelte Position wird basierend auf der erhaltenen Satellitennavigationssignalgüte korrigiert. Dabei können bspw. Satellitennavigationssignale mit geringer Satellitennavigationssignalgüte ignoriert oder geringer gewichtet werden, als Satellitennavigationssignale mit hoher Güte.

Dadurch ist es möglich, Hindernisse oder Störungen, die zu einer Verschlechterung des empfangenen Satellitennavigationssignals führen können, wie die eingangs erwähnten Bauwerke, atmosphärische Störungen oder dergleichen, bei der Bestimmung der Position zu berücksichtigen. Es können folglich ortsabhängige und/oder zeitabhängige Störungen berücksichtigt werden.

Da die erhaltenen Gütedaten die Satellitennavigationssignalgüte in Abhängigkeit einer Ortsinformation angeben, kann grundsätzlich für jeden beliebigen Ort die Satellitennavigationssignalgüte angegeben werden. Die Satellitennavigationssignalgüte ist dabei, wie auch schon eingangs erwähnt, geringer, wenn das Satellitennavigationssignal bspw. von einem Gebäude gespiegelt wurde oder von einem Satelliten gar nicht erst aufgrund eines baulichen, geologischen oder sonstigen Hindernisses in der Sichtlinien zwischen Satelliten und Navigationseinrichtung, bzw. ihrer Antenne, empfangen werden kann.

Die Gütedaten können beliebig oft erhalten werden, z. B. für ein bestimmtes geographisches Gebiet mit einer vorgegebenen Ausdehnung, jedes Mal wenn das Fahrzeug steht (z. B. an jeder Kreuzung), nach einer vorgegebenen Zeitdauer, etc. Die Gütedaten können folglich auf einmal für viele verschiedene Orte abgerufen werden oder bspw. basieren auf der aktuell ermittelten Position.

Die erhaltenen Gütedaten können dabei in beliebiger Form vorliegen, bspw. als Tabelle, als Kartendaten, also Vektordaten, etc., solange eine Zuordnung zwischen einer Ortsinformation und einer Satellitennavigationssignalgüte gegeben ist. Die Satellitennavigationssignalgüte kann bspw. als Satellitennavigationssignalgütewerte vorliegen, wie es dem Fachmann grundsätzlich bekannt ist. Die Ortsauflösung der Gütedaten kann beliebig genau bzw. ungenau gewählt werden und die vorliegende Erfindung ist nicht auf eine bestimmte Genauigkeit festgelegt. Bei manchen Ausführungsbeispielen beträgt die Genauigkeit ca. einen Straßenblock, das heißt einen Abschnitt von einer Kreuzung zur nächsten.

Folglich haben die Ausführungsbeispiele folgende Vorteile. Bei manchen Ausführungsbeispielen ist eine Kostenersparnis beim Fahrzeug bzw. seiner Navigationseinrichtung möglich und eine Reduzierung des Rechenaufwands im Fahrzeug bzw. in der Navigationseinrichtung. Ferner können die Daten anderer Fahrzeuge bzw. Navigationseinrichtungen einbezogen werden und die Gütedaten können entsprechend aktuell gehalten werden, wie es oben ausgeführt wurde. Die Ortungsgenauigkeit kann folglich durch die Einbeziehung von orts- und zeitabhängigen Störquellen (wie oben beschrieben, bauliche Hindernisse, geographische Hindernisse, Wettereinflüsse) verbessert werden. Es ist eine individuelle Gütebewertung der einzelnen Satelliten bei manchen Ausführungsbeispielen möglich und eine Vergleichsanalyse von Daten, die bspw. von zahlreichen Fahrzeugen zur Verfügung gestellt werden, kann die Berechnung der Satellitennavigationssignalgüte verbessern, wie es auch noch weiter unten ausgeführt wird.

Wie oben bereits erwähnt, werden bei manchen Ausführungsbeispielen die Gütedaten über eine "Cloud", also einen entfernten Computer, bezogen. Dadurch kann vorteilhafterweise die Aktualität der Gütedaten gewährleistet sein, indem sie bspw. regelmäßig aktualisiert werden. Die Aktualisierung kann dabei über spezielle Messfahrzeuge oder dergleichen geschehen, die bspw. in Ballungszentren gezielt Straßen abfahren, um aktuelle Satellitennavigationssignalgütewerte zu ermitteln. Die Gütedaten können aber auch aufgrund von Daten aktualisiert werden, die bspw. von Navigationseinrichtungen in Fahrzeugen oder dergleichen vorgesehen sind, wie auch weiter unten noch weiter ausgeführt wird. Bei manchen Ausführungsbeispielen können vorteilhafterweise auch noch weitere Daten verwendet werden, um aktuelle Satellitennavigationssignalgütewerte zu ermitteln. Solche Daten können bspw. meteorologische Daten sein, die Angaben zu kurzfristigen atmosphärischen Störungen, Wetterdaten, Wetterprognosedaten oder dergleichen enthalten können.

Ferner kann in der Cloud vorteilhafterweise die nötige Rechenleistung zur Erzeugung der Gütedaten, welche die Satellitennavigationssignalgüte in Abhängigkeit einer Ortsinformation angeben, zur Verfügung stehen, sodass bspw. eine Navigationseinrichtung mit nur geringer Rechenleistung ausgestattet werden muss.

Auch eine Analyse und Verfeinerung der Berechnung durch sogenannte BigData-Techniken, wie bspw. die umfangreiche Sammlung von Daten von vielen Navigationseinrichtungen oder dergleichen, kann vorteilhafterweise in der Cloud realisiert sein.

Bei manchen Ausführungsbeispielen können die Gütedaten, welche die Satellitennavigationssignalgüte in Abhängigkeit einer Ortsinformation angeben, vorteilhafterweise vorberechnet werden und z. B. über eine zusätzliche Schicht in Kartendatenbanken (lokal oder in der Cloud, einem Netzwerkspeicher oder dergleichen) abgelegt und ausgelesen werden.

Die Satellitennavigationssignalgüte kann zusätzlich in Abhängigkeit eines Satelliten des Satellitennavigationssystems angegeben sein. Dadurch ist es vorteilhaft möglich, für jeden Satelliten, der an dem entsprechenden Ort vorhanden ist, eine eigene Satellitennavigationssignalgüte anzugeben. Daher können bspw. Satellitennavigationssignale, die von einem bestimmten Satelliten kommen, bei der Positionsermittlung vorteilhafterweise ignoriert werden oder bspw. mit einem geringen Gewicht versehen werden, sodass der Einfluss eines solchen Satellitennavigationssignals entsprechend verringert wird.

Bei manchen Ausführungsbeispielen ist die Satellitennavigationssignalgüte zusätzlich in Abhängigkeit einer Zeitvorgabe angegeben. Dadurch kann vorteilhafterweise auf zeitabhängige Ereignisse reagiert werden, wie es z. B. bei atmosphärischen Störungen (Wolken, Gewitter, Starkregen, Schneefall oder dergleichen) der Fall sein kann oder auch bei Baustellen oder dergleichen.

Bei manchen Ausführungsbeispielen ist die Satellitennavigationssignalgüte zusätzlich in Abhängigkeit eines Winkelbereiches angegeben. Dadurch kann vorteilhafterweise ermittelt werden, ob das empfangene Satellitennavigationssignal in dem angegebenen Winkelbereich ist oder nicht und dementsprechend kann die Korrektur der ermittelten Position vorgenommen werden.

Außerdem kann die ermittelte Position an einen entfernten Computer übermittelt werden, sodass bspw. der entfernte Computer vorteilhafterweise in Reaktion darauf die Gütedaten, die eine Satellitennavigationssignalgüte in Abhängigkeit einer Ortsinformation angeben, übermitteln kann, welche die Satellitennavigationssignalgüte für die ermittelte Position (und deren Umgebung) angegeben.

Bei manchen Ausführungsbeispielen werden zusätzlich Daten an einen entfernten Computer übermittelt, die indikativ für eine Satellitennavigationssignalgüte des empfangenen Satellitennavigationssignals sind. Solche Daten können bspw. ein Signal-zu-Rauschen-Verhältnis für das empfangene Satellitennavigationssignal angeben. Diese Daten können von dem entfernten Computer gesammelt und ausgewertet werden und folglich können die Gütedaten, die eine Satellitennavigationssignalgüte in Abhängigkeit einer Ortsinformation angeben, entsprechend in vorteilhafter Weise verbessert oder aktualisiert werden.

Außerdem werden bei Ausführungsbeispielen zusätzlich Sensordaten, die indikativ für einen Fahrzustand eines Fahrzeugs sind, erhalten und die Position zusätzlich basierend auf den Sensordaten korrigiert. Es ist bekannt, den Fahrzustand des Fahrzeugs mittels Sensordaten zu ermitteln, die bspw. die Radgeschwindigkeit eines jeden Rades angeben, die Drehrichtung des Fahrzeugs, die Beschleunigung, usw. Mit diesen Sensordaten kann ermittelt, werden, wie schnell und in welche Richtung ein Fahrzeug fährt. Ist bspw. eine Startposition in einer Karte für das Fahrzeug bekannt, so kann alleine auf Grundlage der Sensordaten die jeweilige, aktuelle Position des Fahrzeugs ermittelt werden. Dieses Verfahren kann insbesondere auf einer kurzen Zeitskala eine hohe Genauigkeit erzielen und daher vorteilhafterweise zur Korrektur der ermittelten Position verwendet werden.

Daher wird zusätzlich eine Abweichung zwischen der korrigierten Position ermittelt, die basierend auf der Satellitennavigationssignalgüte korrigiert ist, und der korrigierten Position, die zusätzlich basierend auf den Sensordaten korrigiert ist, wodurch vorteilhaferweise die Positionsgenauigkeit weiter verbessert werden kann.

Ferner werden zusätzlich Daten an einen entfernten Computer gesendet, die indikativ für die ermittelte Abweichung sind. Damit kann der entfernte Computer mittels der Abweichung die Gütedaten vorteilhafterweise aktualisieren oder korrigieren, die eine Satellitennavigationssignalgüte in Abhängigkeit einer Ortsinformation angeben. Bei manchen Ausführungsbeispielen produziert der entfernte Computer folglich die Gütedaten auf Grundlage der an den Computer gesendeten Position, der Satellitennavigationssignalgüte und/oder der Abweichung.

Manche Ausführungsbeispiele betreffen eine Navigationseinrichtung, die einen Speicher, eine Kommunikationsschnittstelle und einen Prozessor umfasst. Die Navigationseinrichtung ist konfiguriert, das hierin beschriebene Verfahren auszuführen.

Die Kommunikationsschnittstelle kann eine drahtlose Kommunikation und/oder eine drahtgebundene Kommunikation bereitstellen, insbesondere eine drahtlose Kommunikation zu dem entfernten Computer ("Cloud"), wie es oben schon beschrieben wurde (z. B. per Mobilfunk, WLAN, etc.).

Die Navigationseinrichtung kann außerdem eine Anzeige, einen Lautsprecher oder ein anderes Ausgabemittel aufweisen, um bspw. Navigationsdaten, Richtungsbefehle, eine Route oder dergleichen einem Nutzer mitzuteilen.

Die Navigationseinrichtung kann tragbar (mobil) ausgestaltet sein oder aber auch fest eingebaut sein, zum Beispiel in einem Fahrzeug, insbesondere Kraftfahrzeug.

Die Navigationseinrichtung kann dazu eingerichtet sein, die Gütedaten, die eine Satellitennavigationssignalgüte in Abhängigkeit einer Ortsinformation angeben, nach einer vorgegebenen Zeitdauer und/oder in Abhängigkeit der ermittelten Position aus ihrem Speicher oder von dem entfernten Computer (aus der "Cloud") abzurufen, wodurch vorteilhaferweise die Gütedaten je nach Bedarf abgerufen werden können und damit bspw. Übertragungskapazitäten gespart werden können. Die vorgegebenen Zeitdauer kann dabei ein Zeitraum sein (täglich, wöchentlich, etc.), eine Fahrtdauer (1h, 2h, etc.), eine Nutzungsdauer, etc. Außerdem kann bspw. die ermittelte Position verglichen werden mit der Ortsinformation und damit abgeglichen werden, ob die Gütedaten für die aktuelle ermittelte Position gültig sind. Sind sie nicht mehr gültig, können neue Gütedaten abgerufen werden, die dann bspw. für eine zukünftige Position gültig sind. Dazu kann vorhergesagt werden, z. B. anhand der aktuellen Fahrtrichtung, für welche Orte zukünftig die Gütedaten benötigt werden.

Manche Ausführungsbeispiele betreffen ein Navigationssystem, das wenigstens eine Navigationseinrichtung, wie hierin beschrieben, und einen von der wenigstens einen Navigationseinrichtung entfernten Computer umfasst, der über eine Kommunikationsschnittstelle mit der wenigstens einen Navigationseinrichtung kommuniziert und der dazu eingerichtet ist, die Gütedaten, welche eine Satellitennavigationssignalgüte in Abhängigkeit einer Ortsinformation angeben, an die Navigationseinrichtung zu übermitteln.

Der entfernte Computer kann zusätzlich dazu eingerichtet sein, die Gütedaten auf Grundlage der an den Computer gesendeten Position, der Satellitennavigationssignalgüte und/oder der Abweichung zu produzieren, wie es auch schon oben ausgeführt wurde.

Das Navigationssystem kann zusätzlich eine Datenbank umfassen, in der die Gütedaten gespeichert sind. Die Datenbank kann direkt in dem Computer, bspw. auf einem geeigneten Speichermedium, lokalisiert sein, oder in einem eigenen, bspw. über ein Netzwerk zugänglichen Speicher, abgelegt sein.

Das hierin beschriebene Navigationsverfahren kann auch als Computerprogramm realisiert sein, das Befehle umfasst, die einen Computer veranlassen, das Navigationsverfahren auszuführen. Ein solches Computerprogramm kann auch auf einem entsprechenden Speichermedium gespeichert sein, als Datei vorliegen oder als Datenstrom bereitgestellt werden.

Auch wenn die Erfindung im Wesentlichen anhand eines Fahrzeugs beschrieben wird, so kann sie auch in anderen Entitäten implementiert werden, z.B. in einem Computer, einem Smartphone, einer Digitalkamera oder dergleichen.

Ausführungsbeispiele der Erfindung werden nun beispielhaft und unter Bezugnahme auf die beigefügte Zeichnung beschrieben, in der:
Fig. 1 schematisch die Abschattung von Satellitensignalen durch Bauwerke veranschaulicht;
Fig. 2 schematisch die Störung von Satellitensignalen durch eine atmosphärische Störung veranschaulicht;
Fig. 3 ein Ausführungsbeispiel einer Navigationseinrichtung und eines Navigationssystems veranschaulicht; und
Fig. 4 ein Ausführungsbeispiel eines Navigationsverfahrens darstellt.

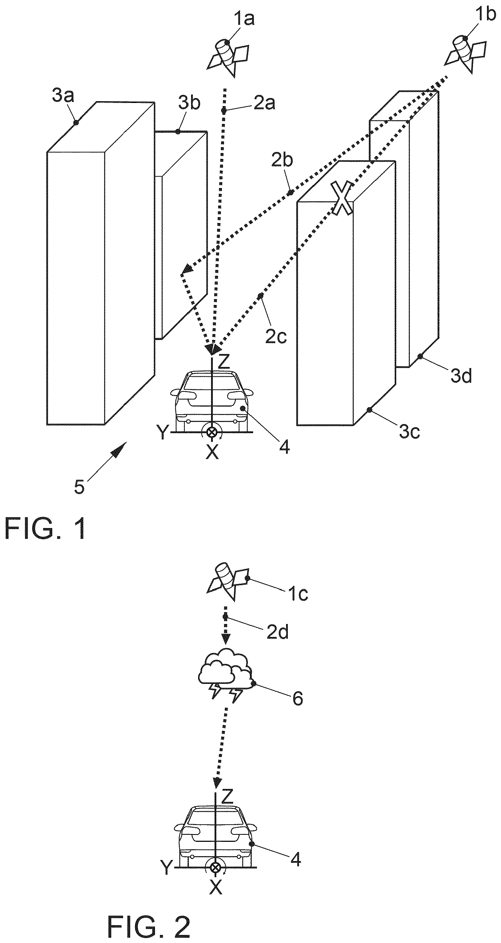

Die Fig. 1 und 2 veranschaulichen, wie eingangs erwähnt, wie Satellitensignale, die von Satelliten 1-c stammen und auf Signalausbreitungswegen 2a-d ausbreiten, gestört werden können.

In Fig. 1 senden symbolisch zwei Satelliten 1a und 1b eines Satellitennavigationssystems, z.B. GPS, Satellitensignale zur Erde. Der Satellit 1a sendet ein Satellitennavigationssignal auf einem Signalausbreitungsweg 2a zur Erde, das von einer Navigationseinrichtung in einem Fahrzeug 4, das auf einer Straße 5, zwischen Gebäuden 3a-3d, fährt, empfangen werden kann. In der Sichtlinie zwischen dem Fahrzeug 4 und dem Satelliten 1a befindet sich kein Hindernis, sodass das Satellitennavigationssignal auf dem Signalausbreitungsweg 2a mit einer hohen Satellitennavigationssignalgüte empfangen werden kann.

Der Satellit 1b sendet ein Satellitennavigationssignal zur Erde, das einmal auf seinem Signalausbreitungsweg 2b von dem Gebäude 3b reflektiert wird und ein anderes Mal auf seinem Signalausbreitungsweg 2c von dem Gebäude 3c abgeschattet wird. Daher haben die Satellitennavigationssignale, die über die beiden Signalausbreitungswege 2b und 2c und damit auf zwei unterschiedlichen Wegen das Fahrzeug 5 treffen, eine Satellitennavigationssignalgüte, die geringer ist, als die Satellitennavigationssignalgüte des Satellitennavigationssignals, welches über den Signalausbreitungsweg 2a empfangen wird. Die Schwächung des Satellitennavigationssignals auf dem Signalausbreitungsweg 2c kann dabei so stark sein, dass es von einer Navigationseinrichtung in dem Fahrzeug 5 nicht mehr verwertet werden kann.

Fig. 2 zeigt eine atmosphärische Störung 6, eine Gewitterwolke, die ein Satellitennavigationssignal, das von dem Satelliten 1d stammt und auf einem Signalausbreitungsweg 2d läuft, abschwächt und folglich mit schlechter Satellitennavigationssignalgüte von der Navigationseinrichtung des Fahrzeugs 4 empfangen wird. Wie oben erwähnt, können auch andere atmosphärische Störungen vorliegen, insbesondere auch durch die atmosphärische Störung indirekt hervorgerufenen Störungen, wie z.B. erhöhte Reflektion an Objekten (Bäume, Gebäude, Gebirge) durch Niederschlag.

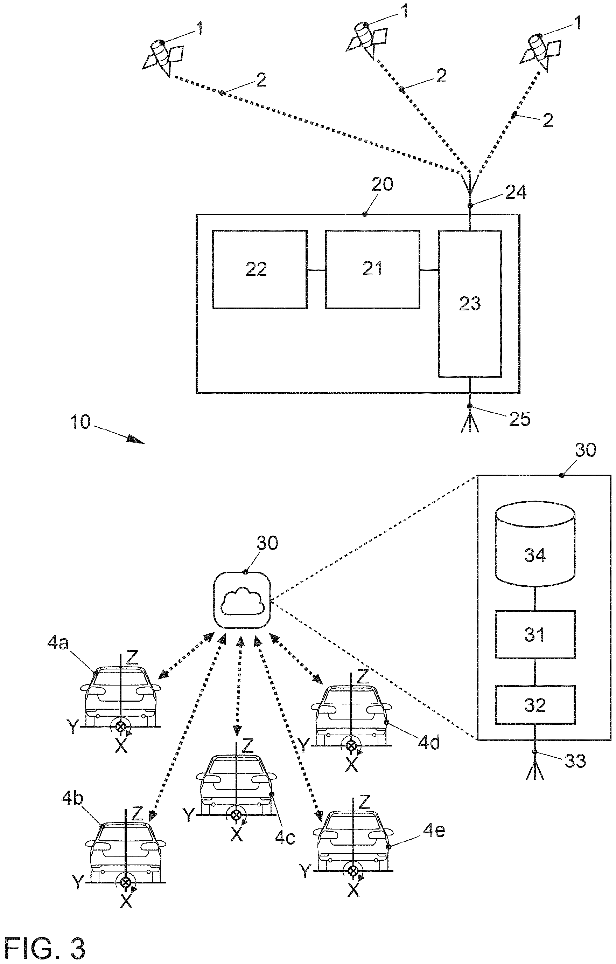

Fig. 3 veranschaulicht ein Navigationssystem 10 mit drei Satelliten 1 eines Satellitennavigationssystems, wie oben bereits erläutert. Außerdem ist beispielhaft eine Navigationseinrichtung 20 im Detail gezeigt, wie sie bspw. in den Fahrzeugen 4a bis 4e vorgesehen ist.

Die Navigationseinrichtung 20 hat einen Prozessor 21, der mit einem Speicher 22 und einer Kommunikationsschnittstelle 23 verbunden ist. Die Kommunikationsschnittstelle 23 hat eine Antenne 24, über die sie Satellitennavigationssignale über Signalausbreitungswege 2 von den Satelliten 1 empfängt, und sie hat eine Antenne 25, über die sie per Mobilfunk mit einem entfernten Computer ("Cloud") 30 kommunizieren kann. Wie auch schon oben ausgeführt, können bei anderen Ausführungsbeispielen die Gütedaten und auch andere relevante Daten lokal in der Navigationseinrichtung 20 in einem entsprechenden Speicher gespeichert sein und nur bei Bedarf aktualisiert werden, bspw. über eine kabelgebundene (USB (Universal Serial Bus), Ethernet, oder dergleichen) oder drahtlose Schnittstelle (WLAN (Wireless Local Area Network), Bluetooth oder dergleichen). Bei solchen Ausführungsbeispielen kann die Antenne 25 obsolet sein.

Der entfernte Computer 30 hat einen Prozessor 31, einen Kommunikationsschnittelle 32 mit einer Mobilfunkantenne 33 und eine Datenbank 34. Die einzelnen Navigationseinrichtungen 20 können per Mobilfunk mit dem entfernten Computer 30 drahtlos kommunizieren.

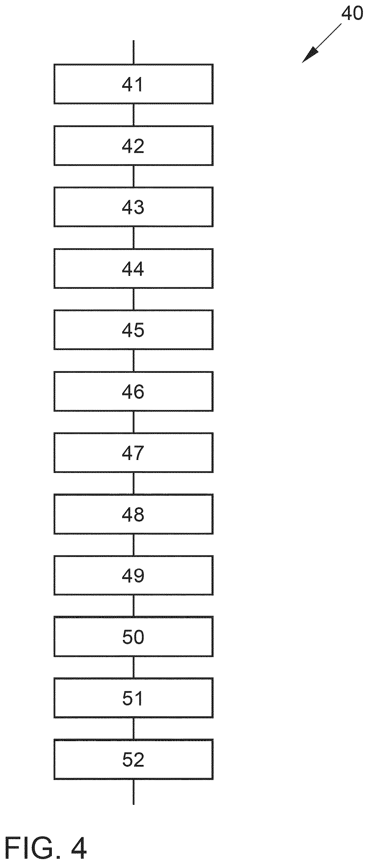

Die Funktionsweise das Navigationssystems 10, der Navigationseinrichtung 20 und des entfernten Computers 30 wird im Folgenden anhand des in Fig. 4 veranschaulichten Navigationsverfahrens 40 erläutert.

Bei 41 empfängt die Navigationseinrichtung 20 die Satellitennavigationssignale über die Signalausbreitungswege 2 von den Satelliten 1 und ermittelt darauf basierend bei 42 eine aktuelle Position des Fahrzeugs 4, in dem es eingebaut ist und wie es auch dem Fachmann grundsätzlich bekannt ist.

Bei 43 fragt die Navigationseinrichtung 20 von dem entfernten Computer 30 Gütedaten an, die eine Satellitennavigationssignalgüte in Abhängigkeit einer Ortsinformation angeben (bspw. bei jedem Halt des Fahrzeugs 4a-e, wie es an einer Kreuzung vorkommt). Der entfernte Computer 30 ruft dazu die entsprechenden Gütedaten bei 44 aus seiner Datenbank 34 ab und übermittelt sie bei 45 per Mobilfunk an die Navigationseinrichtung 20.

Wie auch schon oben ausgeführt, können die Gütedaten unterschiedlich umfangreich sein. So können sie lediglich eine reine Bewertung der Satellitennavigationssignalgüte für den aktuellen Ort enthalten. Sie können aber auch zusätzlich eine Satellitennavigationssignalgüte für die aktuelle Zeit (bzw. aktuellen Zeitbereich), eine Satellitennavigationssignalgüte spezifisch für einen Winkelbereich für den Satellitenempfang, z. B. für Ausrichtung/Heading und Azimuth, und/oder jeden einzelnen Satelliten 1 für den aktuellen Ort bzw. die aktuelle Position enthalten, an dem sich das Fahrzeug 4 (bzw. 4a-e) mit der Navigationseinrichtung 20 befindet. Basierend auf den von dem entfernten Computer 30 ("Cloud") erhaltenen Gütedaten korrigiert die Navigationseinrichtung 20 bei 46 die ermittelte Position, indem sie bspw. Satellitennavigationssignale über die Signalausbreitungswege 2b,c, d (Fig. 1 und 2) ignoriert oder mit einer niedrigen Gewichtung versieht, die eine entsprechend schlechte, d. h. niedrige Satellitennavigationssignalgüte haben, da sie von Satelliten 1b, c (Fig. 1 und 2) stammen, bei denen ein Hindernis auf dem Weg zur Navigationseinrichtung 20 im Weg ist, das wie ein Signalfilter wirkt, oder eine andere Störung wie sie auch oben erwähnt wurde, wie z.B. eine atmosphärische Störung, eine Reflektion oder dergleichen.

Damit wird bei der Ortung bspw. die Auswahl der verwendeten Satelliten dynamisch beeinflusst, welche für die Positionsbestimmung von der Navigationseinrichtung 20 verwendet werden. Außerdem kann insgesamt auch das Gewicht der Ortung über das Satellitennavigationssystem gegenüber anderen Ortungsmechanismen für die finale Positionsbestimmung dynamisch angepasst werden. Andere Ortungsmechanismen beruhen bspw. auf Sensordaten, die den jeweiligen aktuellen Fahrzeugzustand angeben und entsprechend zur Positionsbestimmung, wie oben ausgeführt, verwendet werden können.

Außerdem kann die Navigationseinrichtung 20 bei 47 bspw. die von ihr an der Antenne 24 empfangene Satellitennavigationssignalgüte bestimmen, bspw. als Signal-zu-Rauschen-Parameter (SNR-Parameter). Ferner kann die Navigationseinrichtung bei 48 eine Abweichung aus der bei 46 ermittelten, korrigierten Position, und einer Position, die, wie ausgeführt, auf Grundlage des mittels Sensordaten erhaltenen Fahrzeugzustands bestimmt wurde, berechnen.

Dementsprechend kann die Navigationseinrichtung 20 bei 49 Daten an den entfernten Computer 30 übermitteln, die bspw. die von der Navigationseinrichtung 20 ermittelte Satellitennavigationssignalgüte und/oder die ermittelte Abweichung enthalten und die auch die aktuelle Position der Navigationseinrichtung 20 enthalten.

Wie oben ausgeführt, kann der entfernte Computer 30 diese Daten von der Navigationseinrichtung 20, bspw. von den Fahrzeugen 4a-e bei 51 empfangen.

Diese bereitgestellten Daten können für die Verbesserung der internen Berechnungen, insbesondere der Gütedaten, verwendet werden. Dementsprechend werden bei 52 die Gütedaten in der Datenbank 34 durch den entfernten Computer 30 auf Grundlage der von den Navigationseinrichtungen 20 der Fahrzeuge 4a-e erhaltenen Daten aktualisiert.

Der Umfang der Daten, die von den Navigationseinrichtungen 20 der Fahrzeuge 4a-e an den entfernten Computer 30 bei 49 übermittelt werden, können unterschiedliche Informationen enthalten, nämliche die aktuelle Position des Fahrzeugs 4a-e, Werte der Messung der Satellitennavigationssignalgüte über die Antenne 24 (z.B. SNR-Werte der über die Signalausbreitungswege 2 empfangenen Satellitennavigationssignale), und/oder die Werte für die Abweichungen der ermittelten korrigierten Position von der finalen Ortung unter

Einbeziehung der Fahrzeugsensorik und der zugehörigen Sensordaten, wobei in Ausführungsbeispielen der Erfindung letztere Werte in den Daten enthalten sind.

Selbstverständlich kann die Navigationseinrichtung 20 noch weitere Korrekturen an der ermittelten Position vornehmen, wie es im Stand der Technik bekannt ist und eingangs erwähnt wurde.

### Bezugszeichenliste

- 1, a-c: Satelliten
- 2, a-d: Signalausbreitungswege von Satellitennavigationssignalen
- 3a-d: Gebäude
- 4,a-e: Fahrzeug mit Navigationseinrichtung
- 5: Straße
- 6: Atmosphärische Störung (Gewitterwolke)
- 10: Navigationssystem
- 20: Navigationseinrichtung
- 21: Prozessor
- 22: Speicher
- 23: Kommunikationsschnittstelle
- 24 25: Antennen
- 30: entfernter Computer ("Cloud")
- 31: Prozessor von 30
- 32: Kommunikationsschnittstelle von 30
- 33: Mobilfunkantenne
- 34: Datenbank
- 40: Navigationsverfahren
- 41: Empfange Satellitennavigationssignal
- 42: Ermittle Position
- 43: Anfrage Gütedaten
- 44: Abrufen Gütedaten aus Datenbank
- 45: Übermitteln Gütedaten an 20
- 46: Korrigieren der ermittelten Position
- 47: Ermitteln Satellitennavigationssignalgüte
- 48: Ermitteln Abweichung
- 49: Übermitteln Daten an 30
- 51: Empfangen Daten von 30
- 52: Aktualisierung Gütedaten

## Patentansprüche

1. Navigationsverfahren mittels einer Navigationseinrichtung für ein Fahrzeug, umfassend:
Empfangen (41) eines Satellitennavigationssignals von einem Satellitennavigationssystem;
Ermitteln (42) einer Position, basierend auf dem empfangenen Satellitennavigationssignal;
Erhalten (45) von Gütedaten, die eine Satellitennavigationssignalgüte in Abhängigkeit einer Ortsinformation angeben, wobei die ermittelte Position mit der Ortsinformation abgeglichen wird; und
Korrigieren (46) der ermittelten Position, basierend auf der Satellitennavigationssignalgüte, **dadurch gekennzeichnet, dass** Sensordaten, die indikativ für einen Fahrzustand des Fahrzeugs (4, 4a-e) sind, erhalten werden und bei dem die Position zusätzlich basierend auf den Sensordaten korrigiert wird, wobei
zusätzlich eine Abweichung zwischen der korrigierten Position ermittelt wird, die basierend auf der Satellitennavigationssignalgüte korrigiert ist, und der korrigierten Position, die zusätzlich basierend auf den Sensordaten korrigiert ist, und bei dem zusätzlich Daten an einen entfernten Computer (30) gesendet werden, die indikativ für die ermittelte Abweichung sind, um die Gütedaten zu aktualisieren oder korrigieren, die eine Satellitennavigationssignalgüte in Abhängigkeit einer Ortsinformation angeben.

2. Navigationsverfahren nach Anspruch 1, bei dem die Gütedaten von dem entfernten Computer (30) erhalten werden.

3. Navigationsverfahren nach einem der vorhergehenden Ansprüche, bei dem die Satellitennavigationssignalgüte zusätzlich in Abhängigkeit eines Satelliten (1, 1a-c) des Satellitennavigationssystems angegeben ist.

4. Navigationsverfahren nach einem der vorhergehenden Ansprüche, bei dem die Satellitennavigationssignalgüte zusätzlich in Abhängigkeit einer Zeitvorgabe angegeben ist.

5. Navigationsverfahren nach einem der vorhergehenden Ansprüche, bei dem die Satellitennavigationssignalgüte zusätzlich in Abhängigkeit eines Winkelbereiches angegeben ist.

6. Navigationsverfahren nach einem der vorhergehenden Ansprüche, bei dem die ermittelte Position an den entfernten Computer (30) übermittelt wird.

7. Navigationsverfahren nach einem der vorhergehenden Ansprüche, bei dem zusätzlich Daten an den entfernten Computer (30) übermittelt werden, die indikativ für eine Satellitennavigationssignalgüte des empfangenen Satellitennavigationssignals sind.

8. Navigationseinrichtung, die einen Speicher (22), eine Kommunikationsschnittstelle (23) und einen Prozessor (21) umfasst, wobei die Navigationseinrichtung (20) konfiguriert ist das Verfahren (40) nach einem der vorhergehenden Ansprüche auszuführen.

## Claims

1. A navigation method by means of a navigation device for a vehicle, comprising:
receiving (41) a satellite navigation signal from a satellite navigation system;
determining (42) a position on the basis of the received satellite navigation signal;
obtaining (45) quality data that indicate a quality of a satellite navigation signal depending on an item of location information, the determined position being compared with the location information; and
correcting (46) the determined position on the basis of the quality of the satellite navigation signal, **characterized in that** sensor data that are indicative of a driving status of the vehicle (4, 4a-e) are obtained and in which the position is additionally corrected on the basis of the sensor data,
a deviation additionally being determined between the corrected position that is corrected on the basis of the quality of the satellite navigation signal, and the corrected position that is additionally corrected on the basis of the sensor data, and in which data that are indicative of the determined deviation are additionally sent to a remote computer (30) in order to update or correct the quality data that indicate a quality of a satellite navigation signal depending on an item of location information.

2. The navigation method according to claim 1, in which the quality data are obtained from the remote computer (30).

3. The navigation method according to any preceding claim, in which the quality of the satellite navigation signal is additionally indicated depending on a satellite (1, 1a-c) of the satellite navigation system.

4. The navigation method according to any preceding claim, in which the quality of the satellite navigation signal is additionally indicated depending on a time target.

5. The navigation method according to any preceding claim, in which the quality of the satellite navigation signal is additionally indicated depending on an angular range.

6. The navigation method according to any preceding claim, in which the determined position is transmitted to the remote computer (30).

7. The navigation method according to any preceding claim, in which data that are indicative of a satellite navigation signal quality of the received satellite navigation signal are additionally transmitted to the remote computer (30).

8. A navigation device comprising a memory (22), a communications interface (23), and a processor (21), wherein the navigation device (20) is configured to execute the method (40) according to any preceding claim.

## Revendications

1. Procédé de navigation au moyen d'un dispositif de navigation pour un véhicule, comprenant :
la réception (41) d'un signal de navigation par satellite provenant d'un système de navigation par satellite ;
la détermination (42) d'une position, sur la base du signal de navigation par satellite reçu ; l'obtention (45) de données de qualité, qui indiquent une qualité de signal de navigation par satellite en fonction d'une information de lieu, la position déterminée étant comparée à l'information de lieu ; et
la correction (46) de la position déterminée, sur la base de la qualité de signal de navigation par satellite, **caractérisé en ce que** des données de capteur, qui sont indicatives d'un état de marche du véhicule (4, 4a-e), sont obtenues et dans lequel la position est corrigée en outre sur la base des données de capteur, dans lequel
un écart entre la position corrigée, qui est corrigée sur la base de la qualité de signal de navigation par satellite, et la position corrigée, qui est corrigée en outre sur la base des données de capteur, est en outre déterminé, et dans lequel des données, qui sont indicatives de l'écart déterminé, sont envoyées en outre à un ordinateur distant (30), pour mettre à jour ou corriger les données de qualité, qui indiquent une qualité de signal de navigation par satellite en fonction d'une information de lieu.

2. Procédé de navigation selon la revendication 1, dans lequel les données de qualité sont obtenues par l'ordinateur distant (30).

3. Procédé de navigation selon l'une quelconque des revendications précédentes, dans lequel la qualité de signal de navigation par satellite est indiquée en outre en fonction d'un satellite (1, 1a-c) du système de navigation par satellite.

4. Procédé de navigation selon l'une quelconque des revendications précédentes, dans lequel la qualité de signal de navigation par satellite est indiquée en outre en fonction d'un temps alloué.

5. Procédé de navigation selon l'une quelconque des revendications précédentes, dans lequel la qualité de signal de navigation par satellite est indiquée en outre en fonction d'une plage angulaire.

6. Procédé de navigation selon l'une quelconque des revendications précédentes, dans lequel la position déterminée est transmise à l'ordinateur distant (30).

7. Procédé de navigation selon l'une quelconque des revendications précédentes, dans lequel des données, qui sont indicatives d'une qualité de signal de navigation par satellite du signal de navigation par satellite reçu, sont en outre transmises à l'ordinateur distant (30).

8. Dispositif de navigation, qui comprend une mémoire (22), une interface de communication (23) et un processeur (21), le dispositif de navigation (20) étant configuré pour exécuter le procédé (40) selon l'une quelconque des revendications précédentes.
